# EUROPEAN PATENT APPLICATION

(11) **EP 1 137 309 A2**
(43) Date of publication of application: **26.09.2001**
(21) Application number: 01302256.1
(22) Date of filing: 12.03.2001
(51) Int. Cl.: H04Q 11/00

(54) **An apparatus and method of routing information between remote sites in an optical network**

(30) Priority: 23.03.2000 US 532299
(71) Applicant: LUCENT TECHNOLOGIES INC., Murray Hill, New Jersey 07974-0636 (US)
(72) Inventor: Jennings, Mark R., Andover, New Jersey 07821 (US); Leone, Frank S., Berkeley Heights, New Jersey 07922 (US); Pimpinella, Richard J., Hampton, New Jersey 08827 (US)
(74) Representative: Watts, Christopher Malcolm Kelway, Dr.

(57) **Abstract**

An apparatus and method for transmitting administrative data between the station systems controllers at different stations along a common optical fiber network. The apparatus utilizes routing modules at each of the stations, wherein the routing modules are serially connected to a common optical pathway within the optical fiber network. The routing module at each station is capable of converting data from the station systems controller into a corresponding optical signal and multiplexes that signal into the common optical pathway. The routing module at each station is also capable of reading a multiplexed signal sent along the common optical pathway from another station.

## Description

### BACKGROUND OF THE INVENTION

### 1. Field of the Invention

In general, the present invention relates to the operational systems of optical fiber networks. More particularly, the present invention relates to the operational systems in an optical fiber network that are used to produce work orders for technicians that repair, alter and maintain the optical fiber network.

### 2. Description of the Prior Art

There are many applications that utilize an optical fiber network to establish communication links between a host digital terminal (HDT) at a central office and an optical network unit (ONU) at a remote location. Rarely does a single fiber extend the full length between the HDT and the ONU without disruption. Rather, optical fiber networks contain many remote stations between the HDT and the ONU. At the various remote stations, optical signals are regenerated to compensate for transmission losses that occur in the optical fibers. Furthermore, remote stations are also used as splicing stations where different optical fiber cables are spliced together.

Many remote stations in an optical fiber network are unmanned and operate in a fully automated fashion. At such remote stations, automated operations are often controlled by a fiber administration apparatus that organizes the various optical fibers that lead into and away from the remote station. The fiber administration apparatus contains a station systems controller that is the computer control for the fiber administration apparatus.

In the fiber administration apparatus, the various optical fibers are directed into an optical distribution frame where the individual optical fibers are terminated in an organized manner. Such fiber administration systems are exemplified by the LGX® fiber administration apparatus which is currently manufactured by Lucent Technologies of Murray Hill, New Jersey, the assignee herein.

Each optical distribution frame located at the remote stations typically defines a plurality of bays, wherein each bay houses several fiber distribution shelves. On each of the fiber distribution shelves are optical connection ports that receive the ends of all of the individual optical fibers that enter that station and are contained within the optical fiber network. By terminating each optical fiber at an optical connection port on one of the different fiber distribution shelves, the location of each optical fiber becomes known within the overall assembly. Once terminated at a known address on one of the fiber distribution shelves, each optical fiber can be readily identified.

A fiber distribution apparatus may contain hundreds or thousands of optical connection ports. Often, technicians are dispatched to remote station to repair, alter or maintain the fiber distribution apparatus. Traditionally, a technician is provided with a paper work order that specifies which connections in the fiber administration apparatus are to be altered. Once at the remote site, the technician must identify the correct optical connection ports and patch cords from the hundreds or thousands that may be present. Because of the number and density of connector port connections and patch cords within the fiber administration apparatus, it is difficult for a technician to properly identify the connector ports and patch cords identified in the work order. As a result, a technician often makes a mistake and disrupts an optical fiber connection not specified in the work order. Other times, the logs at the remote location that list the location of specific connector ports and patch cords may be erroneous. As such, even if a work order is properly followed, the wrong optical fiber connection may be disrupted. Due to such problems, it has been estimated that up to 90% of all inadvertent optical fiber disruptions are caused by such technician errors.

In the prior art, line tracing systems have been developed to help technicians trace specific patch cords in a fiber administration apparatus.

However, such line tracing systems are designed to be used at the central office of the fiber administration apparatus where the main systems control computer is located. Line tracing information is not transmitted from a central office to a remote station.

The optical fibers that extend between a central station and the various remote stations carry a very large volume of telecommunications data. As such, the optical fibers are extremely valuable. It is not economically practical to dedicate one optical fiber for use in administrative communications between stations. As a result, although telecommunications data passes freely between the various stations in the optical fiber network, the various administration systems at the different stations do not communicate over that optical fiber network.

As such, there exists a need to provide an apparatus and method that can be used to promote direct communications between stations in an optical fiber network using the optical fibers in that network without requiring a dedicated optical pathway or otherwise disrupting normal communications within that optical fiber network.

### SUMMARY OF THE INVENTION

The present invention is an apparatus and method for transmitting data between the local area networks of different stations along a common optical fiber network. The apparatus utilizes routing modules at each of the stations, wherein the routing modules are serially connected to a common optical pathway within the optical fiber network. The routing module at each station is capable of converting data received through its local area network into a corresponding optical signal and multiplexes that signal into the common optical pathway. The routing module at each station is also capable of reading a multiplexed signal sent along the common optical pathway from another station.

Accordingly, data between the local area networks at various stations can be exchanged directly over the optical fiber network that connects those stations. This enables data to be forwarded directly to remote stations for use by technicians.

### BRIEF DESCRIPTION OF THE DRAWINGS

For a better understanding of the present invention, reference is made to the following description of an exemplary embodiment thereof, considered in conjunction with the accompanying drawings, in which:
FIG. 1 is a perspective view of an optical fiber administration apparatus containing a first plurality of bays and a second plurality of fiber distribution shelves in each bay;
FIG. 2 is a schematic view of an optical fiber network in accordance with the present invention;
FIG. 3 is a schematic view of a routing module routing a signal into an optical fiber network; and
FIG. 4 is a schematic view of a routing module receiving a signal from an optical fiber network.

### DETAILED DESCRIPTION

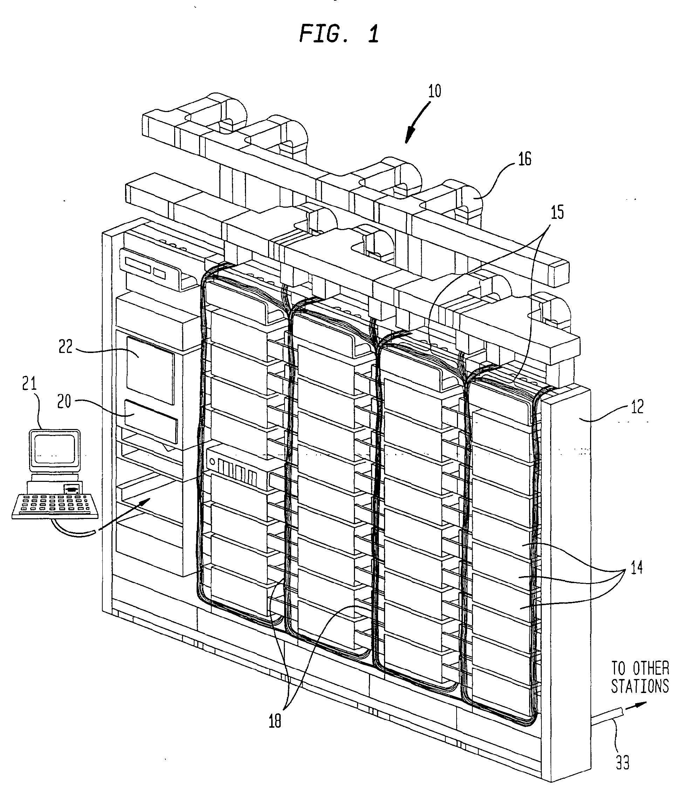

In Fig. 1, a fiber administration apparatus 10 is shown of the type that is located at many remote stations in an optical fiber network. The exemplary fiber administration apparatus 10 includes an optical fiber distribution frame 12 that is affixed in a set position to the floor of the station. The fiber distribution frame 12 defines a plurality of bays 15. Each bay 15 is a vertical structure that supports a plurality of fiber distribution shelves 14. The fiber distribution shelves 14 come in one of three standard sizes, having a five inch height, a seven inch height or a nine inch height. A network of conduits 16 lead the various optical fibers from the optical fiber network to the fiber distribution shelves 14. Each of the fiber distribution shelves 14 contains connection ports (not shown) that are interconnected by patch cords 18 that extend throughout the fiber administration frame 12.

In addition to the fiber distribution shelves 14, the fiber administration apparatus 10 also may include a station systems controller 20. If present, the station systems controller 20 runs the electronic operations of the fiber administration apparatus 10 through a Local Area Network (LAN). The station systems controller 20 has a display 22 as is typical for computer control systems. A stations systems controller 20 is present at the central office of the optical fiber network. However, at remote stations, a systems controller is often not present. Rather at certain remote stations, technicians often bring portable controller units 21 to the remote stations. The portable controller units 21 can be any portable computer, such as a lap top computer or palm top computer. The portable controller unit 21 is then connected to the local area network of the remote station by the technician.

Each time the fiber administration apparatus 10 is altered by a technician, the station systems controller 20 at that location or the portable controller unit 21 brought to that location recognizes the alteration. The station systems controller 20 or portable controller unit 21 therefore contains an up-to-date account of the location of all optical fibers and patch cords 18 contained within the fiber administration apparatus 10.

Using embedded LAN connections and standard telephone connections, information from a central headquarters can be forwarded to the remote stations However, such a configuration requires the use of the public telephone apparatus. The present invention provides a superior way of transmitting information to and from remote stations utilizing the optical network that already exists between the various remote stations.

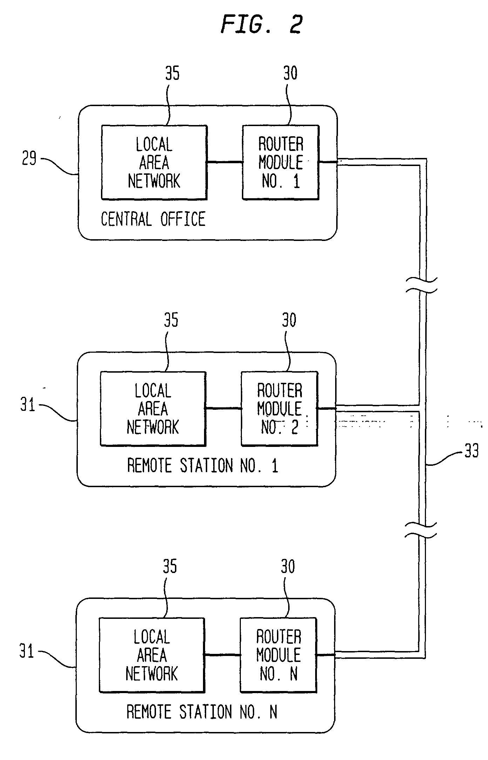

Referring to Fig. 2, it can be seen that a typical optical network has a central office 29 and a plurality of remote stations 31 that are interconnected by an optical fiber network 33. Located at the central office and at each of the remote stations 31 is at least one router module 30. The purpose of the router modules 30 is to establish two-way data transmissions between the local area networks 35 at different stations including the central office 29 and the remote stations 31, within the optical fiber network. The central office 29 and each of the remote stations 31 in the optical fiber network 33 is interconnected by the optical fibers that pass through the optical fiber network 33. The various optical fibers carry commercial telecommunication transmissions. As will be explained, the router modules 30 enable data transmissions to be multiplexed into the commercial telecommunications transmissions, thereby enabling the local area networks 35 at separate stations to intercommunicate through the optical fiber network that interconnects those stations.

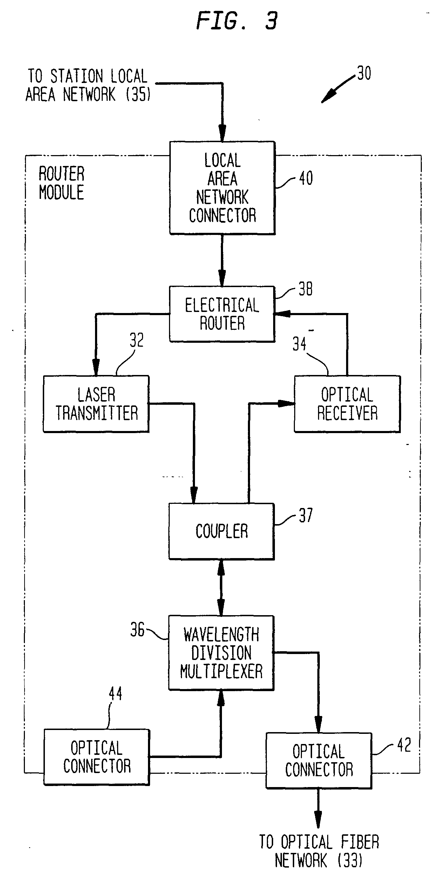

Referring now to Fig. 3, the router modules 30 contain a laser transmitter 32 to transmit optical signals and an optical receiver 34 to receive optical signals. The router module 30 also contains an electrical router 38 that utilizes the local area network (LAN) protocols used by the fiber administration apparatus of the remote station 31 in which the router module 30 is located.

The router module 30 contains a bi-directional LAN connector port 40 that interconnects with the local area network of the fiber administration apparatus at that remote station 31. The router module 30 sends and receives signals from the local area network 35 through the LAN connection port 40.

A first router module 30 is disposed at the central office 29 of the fiber administration apparatus. Other router modules 30 are positioned at each of the remote stations 31 that are connected by the optical fiber network 33. Most every optical pathway in the optical fiber network 33 is active and is used to carry commercial telecommunications signals from point to point in the network. At least one active optical pathway in the optical fiber network 33 is also used to link the various router modules.

Fig. 3 further illustrates a router module 30 as used to transmit a signal from the local area network at its location to some other router module at a different location. The router module 30 receives a signal from the local area network at its location. The signal is received by the router module through the bi-directional LAN connector port 40.

Once a signal from the local area network 35 is received through the bi-directional LAN connector port 40, the signal is directed as a command signal to the laser transmitter 32 through the electrical router 38. The laser transmitter 32 transmits an optical signal that corresponds to the received local area network signal. The optical signal generated by the laser transmitter 32 is produced at a wavelength that is not used by the commercial telecommunications signals in the optical fiber network 33. The newly generated optical signal passes through an optical coupler 37 and enters the wavelength division multiplexer 36. The wavelength division multiplexer 36 multiplexes the newly generated optical signal into the optical fiber network 33.

The output of the wavelength division multiplexer 36 is directed to a first optical connector 42 on the router module 30. The first optical connector 42 is connected to a selected optical pathway in the optical fiber network 33. As a result, the transmission carried by that optical pathway in the optical fiber network 33 includes the commercial telecommunications signal and the newly generated optical signal that has been multiplexed with the commercial telecommunications signal.

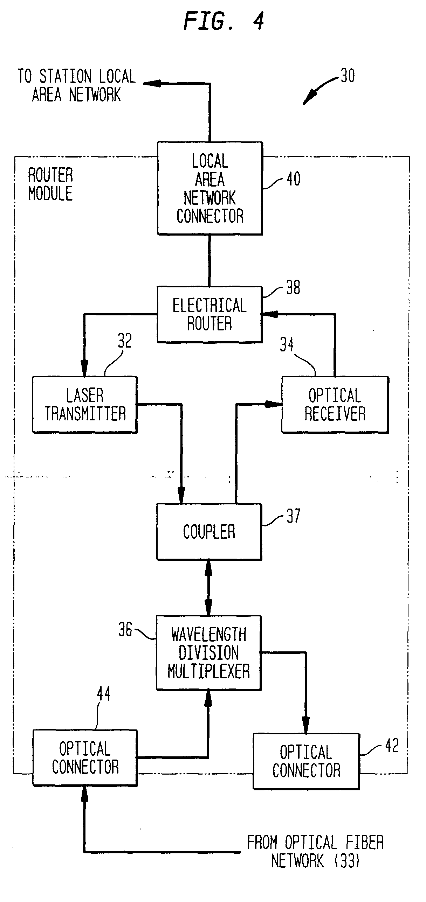

Referring now to Fig. 4, a router module 30 is shown receiving a signal from some other router module 30 via the optical fiber network 33. The router module 33 is connected to the optical fiber network 33 via a second connector port 44. The signal received by the second connector port 44 includes the commercial telecommunications transmission as well as the multiplexed signal added by some other router module. The combined signal is directed to the wavelength division multiplexer 36. The wavelength division multiplexer 36 removes the multiplexed signal from the transmission and leaves the commercial telecommunications transmission unaffected. The commercial telecommunications signal exits the second connector port 44 of the router module unaffected. The multiplexed signal from a distant router module is passed through the optical coupler 37 to an optical receiver 34. The optical receiver 34 converts the optical signal into a corresponding electrical signal. The electrical signal is received into the electrical router 38 and is read into the local area network 35 at that location through the bi-directional LAN connection port 40.

It should be understood that the transmission process illustrated by Fig. 3 and the receiving process illustrated by Fig. 4 can be performed by a single router module 30 simultaneously. The use of the bi-directional LAN router connector 40 enables the router module 30 to simultaneously send and receive signals from the local area network 35 at the location of that router module 30. Additionally, the use of the optical coupler 37 enables the wavelength division multiplexer 36 to simultaneously add and remove multiplexed signals to and from the optical fiber network 33.

More information on the physical structure of the router modules and alternate embodiments of the router module can found in co-pending U.S. Patent Application No. 09/532 296.

The router module is a module that can be co-located within the fiber administration apparatus at both the main office and the remote stations. The router modules can be used to send and receive any type of data between the fiber administration systems of the different stations, such as alarm signals, administrative monitoring data and the like. However, one particularly useful application for the router modules is to transmit electronic work orders to remote stations of an optical fiber network from the central station.

Returning to Figs. 1 and 2, it will be understood that at least one router module can be co-located within the fiber administration apparatus 10 of the central office and each of the remote stations 31. To utilize the present invention apparatus, a technician can be dispatched to a remote station 31. Once at the remote station 31, the technician can interface with the local area network 35 at the remote station 3 lusing the station systems controller 20, if present, or a portable controller unit 21 if no systems controller is available. Once interfaced with the local area network 35 at the remote station 31, a technician can initiate a query for work orders. The query is sent to the central office 29 through the router module at the remote station 31. The query is received at the central office 29 and a work order is generated. The work order is converted from an electrical signal to an optical signal by the router module 30 at the central office 29. The optical signal containing the work order is then multiplexed into a commercial telecommunications signal passing through the optical fibers of the optical fiber network 33 using the router module 30 present at the central office.

The work order optical signal is sent through the optical fiber network 33 to the remote station 31. Once at the appropriate remote station 31, the work order optical signal is removed from the commercial telecommunications signal by the wavelength division multiplexer 36 (Fig 3) contained within the router module 30 at that remote station 31.

Once removed from the commercial telecommunications signal, the work order optical signal is converted into an electronic signal by the router module 30. The electronic signal is then read by the technician at the remote station. Once read, the technician is aware of work that must be performed at that remote station 31.

Once a technician arrives at the remote station 31, the technician accesses the station systems controller 20 or a portable controller unit 21. Either the station systems controller 20 or the portable controller unit 21 displays the work order. The work order may contain multiple tasks to be performed. Using the station systems controller 20 or the portable controller unit 21, the technician can select which task s/he intends to perform next. Once selected, the station controller 20 or portable controller unit 21 transmits the location of the connection ports and the patch cords to be accessed. By showing the location of the connection parts and the patch cords, it is far less likely that the technician will accidentally access the wrong connector ports or the patch cord.

If the fiber distribution shelves 14 at the remote station 31 have tracing capabilities, the station systems controller 20 or portable controller unit 21 will light the appropriate LEDs at the location of the connector ports. Fiber distribution shelves with line tracing capabilities are disclosed in GB-A-234 7 508.

If the fiber distribution apparatus at the remote station has lighted patch cord pathways, the systems controller will also light the lights that show the route of the patch cords to be added, deleted or altered. Fiber distribution systems having light patch cord pathways are shown in co-pending U.S. Patent Application No. 09/329,750.

By providing an electronic work order at the remote station 31, the local area network 35 at the remote station 31 can monitor the work of the technician. If the technician disconnects a patch cord not authorized, the local area network 35 can immediately sound an alarm informing the technician of the error. The error can therefore be fixed in a matter of seconds. Furthermore, by providing on-site indications as to the location of various connector ports and patch cords, the local area network 35 at that station can better help a technician avoid making an error.

It will be understood that the embodiment of the present invention specifically shown and described is merely exemplary and that a person skilled in the art can make alternate embodiments using different configurations and functionally equivalent components. All such alternate embodiments are intended to be included in the scope of this invention as set forth in the following claims.

## Claims

**1.** In an optical fiber network having a plurality of stations connected by optical fibers, wherein each station has an associated local area network, an apparatus for exchanging information between the local area networks the apparatus comprising:
a router disposed in one of the plurality of stations where such router is optically coupled to a common optical pathway and electrically coupled to the local area network of the station, wherein the router is configured to convert electrical data it receives from the local area network to a corresponding optical signal that it multiplexes onto the common optical pathway, the router being further configured to receive optical signals from the common optical pathway and convert the received optical signals to electrical signals that it reads onto the local area network thereby allowing the router to exchange information between the local area network and at least one other router disposed in another of the plurality of stations whereby the at least one other router is optically coupled to the common optical pathway.

**2.** The apparatus according to Claim 1, the router further comprises a laser transmitter for converting electrical signals into corresponding optical signals.

**3.** The apparatus according to Claim 1, further comprising:
at least one wave division multiplexer located within the router; and
an optical coupler coupled to the wave division multiplexer, wherein the coupler enables the router to send and receive optical signals simultaneously.

**4.** The apparatus according to Claim 1, wherein the router contains a single wavelength division multiplexer for multiplexing the corresponding optical signal into the common optical pathway.

**5.** The apparatus according to Claim 4, wherein the wavelength division multiplexer also operates to demultiplex the optical signal from the common optical pathway.

**6.** An apparatus for transmitting data between a central office and a remote station optically connected by a common optical pathway in an optical fiber network, wherein the remote station has a local area network, the apparatus comprising:
a router disposed at the remote station, where the router is optically coupled to the common optical fiber pathway and electrically coupled to the local area network, wherein the router receives data from the local area network and converts the data into a corresponding optical signal and multiplexes the corresponding optical signal onto the common optical fiber pathway to the remote station and the router being further configured to receive optical signals from the remote station via the common optical fiber pathway and convert the received optical signals to electrical signals that it reads onto the local area network thereby allowing the router to exchange information between the local area network and at least one other router disposed at the remote station.

**7.** The apparatus according to Claim 6, wherein the data includes work order instructions, the apparatus further comprising:
line tracing indicators at the remote station, wherein a computerized station controller selectively lights the line tracing indicators in accordance with the work order instructions.

**8.** The apparatus according to Claim 6, wherein the router contains a laser transmitter for converting the data into the corresponding optical signal.

**9.** The apparatus according to Claim 6, wherein the router contains an optical receiver that converts the corresponding optical signal into the electrical signal.

**10.** The apparatus according to Claim 6, wherein the router contains a wavelength division multiplexer for multiplexing optical signals into the common optical fiber pathway.

**12.** The apparatus according to Claim 10, wherein the wavelength division multiplexer further removes the corresponding optical signal from the common optical fiber pathway.

**12.** The apparatus according to Claim 6, wherein the router enables two way communication with other routers, via the common optical fiber pathway.

**13.** A method of transmitting data between various stations in an optical fiber network, ones of the stations being cooperatively linked with an associated router interconnected to a common optical pathway in the optical fiber network and being capable of transmitting and receiving optical signals, the method comprising the steps of:
generating an optical signal at a station;
multiplexing the optical signal with a second optical signal to form a combined signal; and
transmitting the combined signal through the common optical pathway to at least one other station.

**14.** The method according to Claim 13, wherein the common optical pathway carries a primary optical signal at a first wavelength and signals between routers are multiplexed with the primary optical signal at a second wavelength.

**15.** The method according to Claim 14, wherein each station has a computerized systems controller that communicates with the router of that station through a local area network within that station.

**16.** A method of transmitting data to a remote station in an optical fiber network, wherein the data comprises work order instructions generated at a central office and converted into a corresponding optical signal multiplexed with a primary optical signal onto the optical fiber network, the method comprising the steps of:
separating the corresponding optical signal from the primary optical signal at the remote station;
converting the corresponding optical signal to an electronic signal at the remote station;
directing the electronic signal to a computer controller at the remote station; and
causing the computer controller to transmit the work order instructions to a technician at the remote location.

**17.** The method according to Claim 16, wherein line tracing indicators that correspond to the work order instructions are located at the remote station.

**18.** The method according to Claim 16, further including the step of electronically monitoring if a technician is properly following the work order instructions.
